# EUROPEAN PATENT SPECIFICATION

(11) **EP 0 682 759 B1**
(45) Date of publication and mention of the grant of the patent: **10.12.1997**
(21) Application number: 93905728.7
(22) Date of filing: 01.03.1993
(51) Int. Cl.: F21L 15/00, H03K 17/28, G04G 15/00

(54) **DEVICE FOR PROTECTION AGAINST BATTERY DISCHARGE**
SCHUTZVORRICHTUNG ZUM VERMEIDEN DER ENTLADUNG EINER BATTERIE
DISPOSITIF EVITANT LA DECHARGE DES PILES ELECTRIQUES

(30) Priority: 02.03.1992 SE 9200623
(43) Date of publication of application: 22.11.1995
(73) Proprietor: KARLQVIST, Jan, S-114 21 Stockholm (SE)
(72) Inventor: KARLQVIST, Jan, S-114 21 Stockholm (SE)
(74) Representative: Hammar, Ernst
(86) International application number: SE9300175
(87) International publication number: WO9318337

(56) References cited:
- US-A- 4 623 957
- PATENT ABSTRACTS OF JAPAN, Vol. 9, No. 86, P-349; & JP,A,59 216 084 (SEIKOUSHIYA K.K.), 6 December 1984 (06.12.84), see Fig 4-10 in the Patent.
- Wireless World, Volume 87, No. 1541, February 1981, IAN HICKMAN, "Batterypowered Instruments pages 57-61", see page 57, right hand column, line 41 - line 61, p 58, left hand column.

## Description

### The invention background

There is a number of equipment's that use one or several batteries as power source. Examples of such equipment's are lamps, receiver, tape recorders and toys. In almost all those equipment's there is an actuator, a switch of some kind, that is used to switch the equipment on and off. The activator is used to switch the equipment off when it's not in use. If one should forget to switch off the equipment after use the battery will be discharged next time one shall use the equipment.

The purpose with the invention is to solve the problem with getting the batteries discharged by mistake. The function of the invention is to automatically switch off the electrical circuit of the equipment a certain time after it has been switched on . Compare with the function off automatic stair light.

Since the invention performance have a resemblance with a coin the invention can be used in practically all equipment's that are run with batteries. The invention shall when it is used be placed between the battery and the pressure device of the battery carrier or be placed between two battery cell, which is easy to do since there always is space thanks to the pressure spring.

Through US 3 535 282 (H G Mallory) it is known that one with an automatic switch off an electrical circuit after a certain time solves the problem with getting the battery discharged by mistake. The device that is described in US 3 535 282 is integrated with the equipment that makes it unusable in all other kinds off equipment's, i.e. toys, radio receivers, without first modifying the equipment. The modification means that one outside the battery carrier shall reach the device and that way makes the device active. This is in most cases very difficult or impossible. To make the device active the regular activator of the equipment is not used.

In US 4 875 147 (R T Auer) is the integration into the device total, which makes it impossible to use in other equipment than it is designed for. In both devices described in US 3 535 282 and US 4 875 147 it is necessary to build in the devices from the beginning when designing the equipment which batteries you want to protect from unintentional discharging.

### General description of the invention

The invention is defined by the features of claim 1.

The invention looks like a coin. Since it's shaped as a coin it can easily be placed in equipment's that have battery carriers.

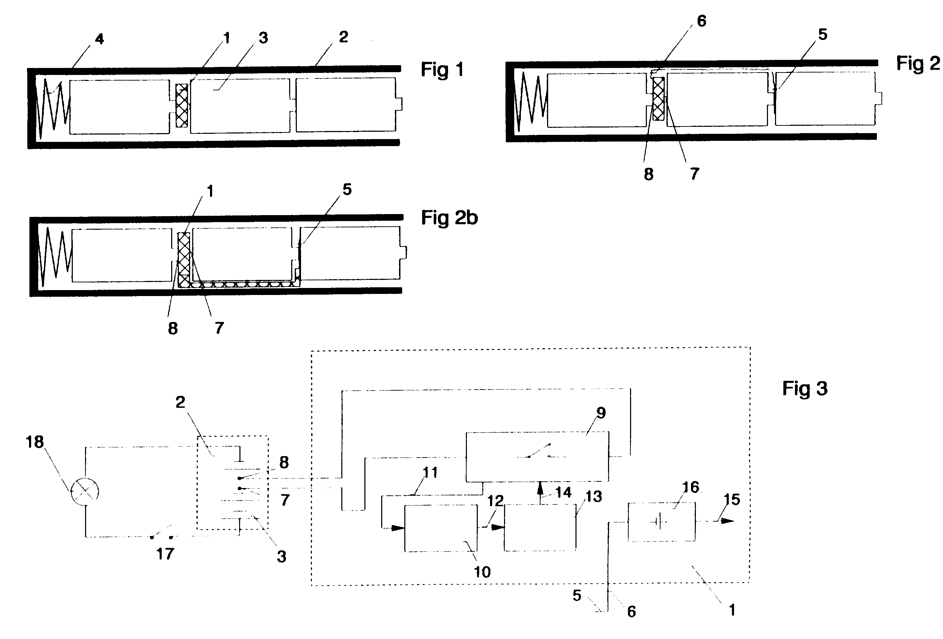

The invention is, see Figure 1, placed in series with the electrical circuit i.e. between the batteries in the carrier. When it's only one battery in the equipment the invention is placed at one of the poles. Since the invention is in series with the electrical circuit the electrical circuit can be broken off or closed, depending on if the invention is electrical insulated or electrical conductive.

If the invention shall be insulated or conductive is controlled by a signal that is generated from a control unit inside the invention. The function of the control unit is like a timer that is used in a kitchen where the timer gives a signal when the eggs are boiled. In this case the control unit is "wind up" inside the invention when the user switch on the flash light or any other equipment where the invention is used. After a determined time a signal is given by the control unit and the invention becomes electrical insulated. When this happens the electrical circuit is broken and the flash light goes out. It is possible to programme the invention with different time length's. In some cases it can be more practical that the invention consists of two parts, see Figure 2, the parts are connected with an electrical wire. The distance between the parts is one or two battery cells.

### Short description of drawings

Figure 1 shows how the invention is placed in the battery carrier, containing batteries, with a common pressure spring.

Figure 2 and 2b show another performance of the invention.

Figure 3 shows a block diagram for one performance of the invention.

Figure 4 shows a state diagram of the electrical circuit diagram showed in figure 5.

Figure 5 shows an electrical circuit diagram of one performance of the invention.

### Detailed description of the invention

**Figure 1** shows the invention (1) placed between the batteries (3) in a battery carrier (2). Since there always is a pressure spring (4) in battery carriers (2) it is always possible to place the invention (1) as shown in the figure.

**Figure 2 and 2 b** show different performances of the invention. In figure 2 the invention consists of two parts. The description for figure 1 is also valid for Figure 2 with the following supplement explanation. The other part (5) of the invention is placed one or two battery cells a part. The parts are connected to each other with an electrical wire (6). In figure 2b the invention is designed like the letter "C" that is attached over the battery. The wire is thereby disguised in the "back of the C".

**In figure 3** the invention is explained in the block diagram. To make the understanding of the block diagram easier the invention is used in a flash light. The flash light consists of a battery carrier (2), batteries (3), the actuator (17) and a bulb (18).

An electrical controlled switch (9) is placed in series with the batteries (3) inside the flash light through the contact surfaces (7) and (8). The contact surfaces are connected to the switch (9). A current detector (10) which measures the current (11) through the switch detects when the actuator of the flash light is put in "ON" position, the flash bulb is lit and a signal (12) is given to the timer(13), the timer starts to measure the time after which the signal (12) is given. After a defined time the timer gives a signal (14) to the switch (9) which takes the "OFF" state. The electrical circuit is cut and the flash light darkens. To reset the invention after it is activated the actuator (17) must be put in it's "OFF" state and then it's "ON" state. When this is done it's registered by the current detector (10) that gives a signal (12) to the timer (13) which gives a signal (14) to the switch (9) to take the state "ON". This means that the flash light is lit again and the procedure that is described in the text above can be repeated.

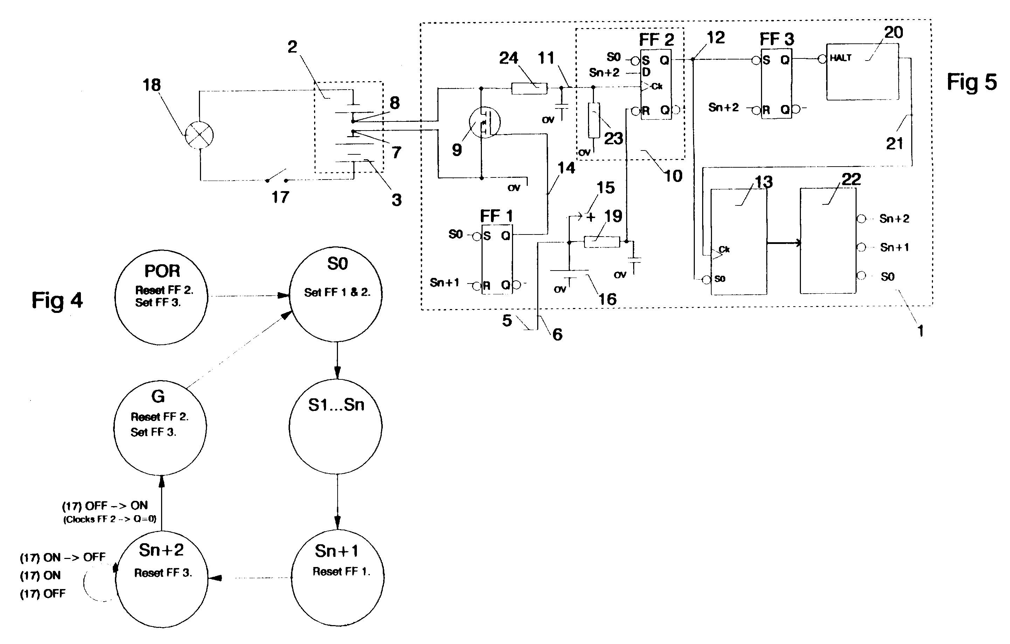

In one technical realisation of the current detector (10) the technical solution can be simpler if the voltage difference over the switch (9) is detected instead of the current through the switch (9), to detect when the flash light is lit. This means that the switch (9) initially is in it's "OFF" state and not until the current detector (10) has detected that the actuator (17) is in it's "ON" state is the switch (9) put in it's "ON" state. This solution is shown in the technical realisation in Figure 5.

The invention is powered (15) by a built in battery (16) or by the batteries in the equipment in which the invention is placed, through the contact sheet metal shield (5) which is connected to the invention with an electrical wire (6).

**Figure 4** shows a state diagram of one kind of performance which is shown in the electrical schematic diagram in Figure 5. When the invention is powered for the first time from the built in battery (16) or from the batteries in the equipment that it is placed in (through 5, 6), the electronics in the invention is set in a defined state POR (Power On Reset). Shortly thereafter the state S0 is taken. At the state S0 the switch (9) is closed and the state S1 is reached.

The states SO to Sₙ is the timer function (13). Depending on how long time the switch (9) shall be closed, the timer (13) is given a suitable number of states. When state Sₙ+1 is taken the switch (9) becomes open and the state Sₙ+2 is reached.

At the state Sn+2 the current detector (10) is armed and the invention reaches a sleep mode. This minimise the power consumption of the invention. The state SN+2 is only left when the actuator (17) is changed from "OFF" state to "ON" state. When this occurs the state G is taken, this state make the invention "wake up" from it's sleep mode, and the state S0 is taken. The sequence is then repeated from state S0.

**Figure 5** shows the electrical wiring schematic of the performance of the state diagram in Figure 4. To make the understanding easier is the electrical circuit diagram explained by using the invention in a flash light. The flash light consist of battery carrier (2), batteries (3), actuator (17) and bulb (18).

When the invention is powered for the first time from the built in battery(16) or from the batteries in the equipment that it is placed in (through 5 , 6), the electronics in the invention is set in a defined state POR (Power On Reset), through the RC circuit (19) that gives a reset signal to the flip-flop (FF2).

The flip-flop (FF2) is sending a signal to the combined timer and state counter (13) to take the state SO on next positive clock edge. At the same time the flip-flop (FF2) gives a set signal to the flip-flop (FF3), which removes the halt signal to the clock generator (20) which output (21) now starts to gives clock pulses to the timer (13). After one pulse from the clock generator the timer (13) is put in the state S0 that is decoded in the state decoder (22) which output S0 becomes true.

The state decoder (22) has two more outputs Sn+1 and Sn+2 that become true when the timer (13) reaches these two states.

SO output sets the flip-flop (FF1) that makes the switch (9), that consists of a FET-transistor (9), to close, the bulb (18) is lit, at the same time the flip-flop (FF2) is set, this removes the order to the timer (13) to take the state S0.

At the next clock cycle (21) the timer (13) takes the state S1. For each clock cycle the state in the timer (13) is increased with 1.

At the state Sn+1 a reset signal is given to the flip-flop (FF1) that makes the switch (9) to open or to increase the resistance of the switch (9) considerable, the bulb (18) is darkened. Since the current detector (10) was not armed , the change in voltage that occurred when the switch (9) is opened not to be detected by the current detector (10).

At the state Sn+2 the current detector (10) is armed by putting the data input pin of the flip-flop (FF2) to a low level and gives a reset signal to the flip-flop (FF3), this switches the clock generator (20) off. The invention is now in a sleep mode which minimises the power consumption of the invention.

The state Sₙ+2 is only left when the actuator (17) is moved from "OFF" state to "ON" state which occurs when signal (11) is detected by the current detector (10).

When the actuator is moved from it's "ON" state to "OFF" state the signal (11) will take a low level with help from the resistor (23). When the actuator then is changed from it's "ON" state the signal (11) will take a high level. Since the current detector (10) is realised by a flip-flop (FF2), that has a positive edge triggered clock input, the data input is transferred to Q-output. At that time the flip-flop FF2 sends a signal (12) to the combined timer and state counter (13) to take the state S0, by this the sequence repeated from state S0.

The RC-circuit (24) has two tasks, one is to prevent that the current detector (10) is reacting on false signals and the other is to protect the flip-flop (FF2) to be destroyed in cases where the voltage over the switch (9) is higher than the battery (16) of the invention.

## Claims

1. A device for placement between two batteries or between battery and pressure device in the battery carrier to equipment's that are powered with batteries or accumulators whereby the device includes a current detector (10), two contact surfaces (7,8), connected to each other through a switch (9) that is controlled by a timer (13) to break the connection or considerably reduce the current a defined time after a current is detected by the current detector (10) and the connection remains cut until the actuator (17) of the equipment is put in "OFF" state and is put back to "ON" state which is detected by the current detector (10) that resets the timer (13) and makes the switch (9) close again.

2. The device according to Claim 1, **characterised** in that the current detector (10) detects the change in voltage over the switch (9) to detect presence of current.

3. The device according to claims 1 or 2, **characterised** in that the current detector (10) detects the change in current through the switch (9) to detect the presence of current.

4. The device according to the claims 1-3, **characterised** in that the device is powered from a built in battery or from the equipment that the device is placed in.

5. The device according to claims 1-4, **characterised** in that the timer (13) in the device can be programmed with different times.

## Patentansprüche

1. Vorrichtung zur Anordnung zwischen zwei Batterien oder zwischen Batterie und Druckvorrichtung im Batterieträger in Geräten, die durch Batterien oder Akkumulatoren angetrieben werden, wobei die Vorrichtung einen Stromdetektor (10) und zwei Kontaktoberflächen (7,8) aufweist, die über einen Schalter (9) miteinander verbunden sind, der durch einen Zeitschalter (13) gesteuert wird, um zu einer definierten Zeit, nachdem vom Stromdetektor (10) ein Strom detektiert wurde, die Verbindung zu unterbrechen oder den Strom beträchtlich zu reduzieren, und wobei die Verbindung unterbrochen bleibt bis das Betätigungsglied (17) des Gerätes in den "AUS"-Zustand und wieder zurück in den "EIN"-Zustand versetzt wird, was durch den Stromdetektor (10) detektiert wird, der den Zeitschalter (13) zurücksetzt und den Schalter (9) wieder schließen läßt.

2. Vorrichtung nach Anspruch 1, dadurch gekennzeichnet, daß der Stromdetektor (10) die Änderung der Spannung über dem Schalter (9) detektiert, um das Vorhandensein des Stromes zu detektieren.

3. Vorrichtung nach Anspruch 1 oder 2, dadurch gekennzeichnet, daß der Stromdetektor (10) die Änderung des Stromes durch den Schalter (9) detektiert, um das Vorhandensein des Stromes zu detektieren.

4. Vorrichtung nach den Ansprüchen 1-3, dadurch gekennzeichnet, daß die Vorrichtung von einer eingebauten Batterie oder von dem Gerät, in dem die Vorrichtung angeordnet ist, angetrieben wird.

5. Vorrichtung nach den Ansprüchen 1-4, dadurch gekennzeichnet, daß der Zeitschalter (13) in der Vorrichtung mit verschiedenen Zeiten programmiert werden kann.

## Revendications

1. Dispositif à placer entre deux piles ou entre une pile et un dispositif de poussée dans le support de pile pour des équipements qui sont alimentés en courant par des piles ou par une batterie d'accumulateurs, le dispositif comportant un détecteur (10) de courant, deux surfaces de contact (7, 8), reliées l'une à l'autre par un commutateur (9) commandé par une minuterie (13) pour couper la connexion ou réduire considérablement le courant à un moment défini après la détection du courant par le détecteur (10) de courant et la connexion restant coupée jusqu'à ce que l'actionneur (17) de l'équipement soit mis en position d'arrêt et soit remis en position de marche, ce qui est détecté par le détecteur (10) de courant qui remet à zéro la minuterie (13) et qui fait se refermer le commutateur (9).

2. Dispositif selon la revendication 1, caractérisé en ce que le détecteur (10) de courant détecte le changement de tension dans le commutateur (9) pour détecter la présence de courant.

3. Dispositif selon la revendication 1 ou 2, caractérisé en ce que le détecteur (10) de courant détecte le changement du courant passant dans le commutateur (9) pour détecter la présence de courant.

4. Dispositif selon les revendications 1 à 3, caractérisé en ce que le dispositif est alimenté en courant depuis une pile incorporée ou depuis l'équipement dans lequel est placé le dispositif.

5. Dispositif selon les revendications 1 à 4, caractérisé en ce que diverses durées peuvent être programmées à l'aide de la minuterie (13) située dans le dispositif.
